# EUROPÄISCHE PATENTANMELDUNG

(11) **EP 0 866 321 A2**
(43) Veröffentlichungstag der Anmeldung: **23.09.1998**
(21) Anmeldenummer: 98810054.1
(22) Anmeldetag: 28.01.1998
(51) Int. Cl.: G01F 23/284

(54) **Sensoreinrichtung**

(30) Priorität: 26.02.1997 CH 448/97
(71) Anmelder: ENZ-Electronic AG, 9056 Gais (CH)
(72) Erfinder: Heierli, Jakob, 9411 Reute (CH); Schuler, Anton, 9436 Balgach (CH)
(74) Vertreter: Kulhavy, Sava, Dipl.-Ing.

(57) **Zusammenfassung**

Die Einrichtung umfasst einen Sensor (1), welcher einem Behälter (10) zugeordnet ist. In diesem Behälter (10) befindet sich, ein zu detektierendes Material (9). Der Sensor (1) weist einen, Wellenleiter (4) auf, in welchem ein Sender (2) und ein Empfänger (3) untergebracht ist. Im Inneren des Wellenleiters (4) befindet sich auch ein Dielektrikum. Eine Oeffnung (7) ist in einer der Wände (18) des Hohlleiters (4) ausgeführt. Der Sensor (1) ist dem Behälter (10) derart zugeordnet, dass die Oeffnung (7) im Hohlleitermantel (5) sich in jenem Bereich der Wand (12) des Behälters (10) befindet, wo das Material (9) detektiert werden soll, und zwar in der Weise, dass die Anwesenheit des Materials (9) die elektrischen Eigenschaften des Wellenleiters (4) ändert.

## Beschreibung

Die vorliegende Erfindung betrifft eine Sensoreinrichtung mit einem Sensor, welcher einen Sender von hochfrequenten Wellen und einen Empfänger für solche Wellen umfasst.

Solche Sensoreinrichtungen sind bereits bekannt und deren Funktion basiert auf dem Prinzip eines Radargerätes. Der Senderteil eines solchen vorbekannten Sensors strahlt hochfrequente Wellen in seine Umgebung ab. Falls sich ein Objekt in der Umgebung des Sensors befindet, so werden die Wellen von diesem Objekt zum Empfängerteil des Sensors reflektiert und dieser meldet die Anwesenheit des Objektes. Die Wellen solcher Sensoren sind derart, dass sie von der Oberfläche des ermittelten Objektes reflektiert werden. Solche Sensoren können somit nicht feststellen, was sich unter bzw. hinter der Oberfläche des Objektes befindet, abspielt oder ähnlich.

Die Aufgabe der vorliegenden Erfindung ist, eine Sensoreinrichtung anzugeben, welche den genannten Nachteil sowie noch weitere Nachteile vorbekannter Sensoreinrichtungen nicht aufweist.

Diese Aufgabe wird bei der Sensoreinrichtung der eingangs genannten Gattung erfindungsgemäss so gelöst, wie dies im kennzeichnenden Teil des Patentanspruchs 1 definiert ist.

Nachstehend werden Ausführungsformen der vorliegenden Erfindung anhand der beiliegenden Zeichnungen näher erläutert. Es zeigt:
Fig. 1 in einem vertikalen Schnitt eine prinzipielle Ausführung der vorliegenden Sensoreinrichtung,
Fig. 2 in einem vertikalen Schnitt eine zweite Ausführung der vorliegenden Sensoreinrichtung,
Fig. 3 perspektivisch und schematisch eine dritte Ausführung der vorliegenden Sensoreinrichtung,
Fig. 4 in einer Draufsicht und ebenfalls nur schematisch eine vierte Ausführung der vorliegenden Sensoreinrichtung,
Fig. 5 perspektivisch und schematisch eine fünfte Ausführung der vorliegenden Sensoreinrichtung und
Fig. 6 schematisch und teilweise in einem vertikalen Schnitt eine noch weitere Ausführungsmöglichkeit der vorliegenden Einrichtung.

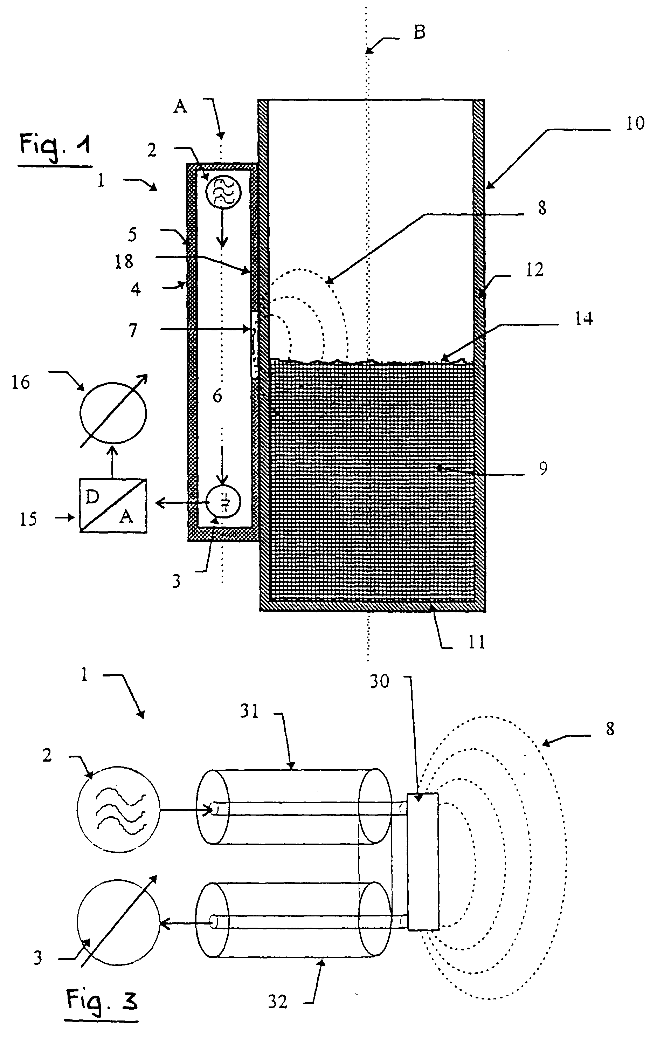

Fig. 1 zeigt in einem vertikalen Schnitt eine erste bzw. prinzipielle Ausführung der vorliegenden Sensoreinrichtung. Diese weist einen Sensor 1 auf, welcher einen Sender 2 von hochfrequenten Wellen, vorteilhaft von Mikrowellen, und einen Empfänger 3 für solche Wellen enthält. Diese Bestandteile 2 und 3 des Sensors 1 sind in einem Hohlleiter 4 untergebracht, wobei der Empfänger 3 sich in einem Abstand vom Sender 2 befindet. Der Sender 2 ist in einer der Endpartien des Hohlleiters 4 angeordnet und der Empfänger 3 ist in der gegenüberliegenden Endpartie des Hohlleiters 4 angeordnet, wobei der Sender 2 gegen den Empfänger 3 hin gerichtet ist. Der Hohlleiter 4 ist einer an sich bekannten Art und er weist einen Mantel 5 aus einem elektrisch leitenden Material auf, in dessen Innerem sich ein Dielektrikum 6 befindet. Der Mantel 5 kann beispielsweise einen kreisrunden, quadratischen oder rechteckförmigen Querschnitt haben. Als Dielektrikum 6 kann Luft, ein Kunststoff, ein keramisches Material oder ähnlich dienen.

Der Sensor 1 ist im in Fig. 1 dargestellten Fall einem Behälter 10 zugeordnet, welcher zur Aufnahme eines Materials 9 bestimmt und ausgeführt ist. Dieses Material 9 kann zumindest eine Flüssigkeit, ein Schüttgut, ein einziges Stück, eine Anzahl von Einzelstücken oder aber auch eine Mischung aus diesen sein. Der Behälter 10 weist einen Mantel auf, welcher im dargestellten Fall aus einem Boden 11 und, je nach der Form des Grundrisses des Behälters 10, aus einer oder aus mehreren Seitenwänden 12 besteht. Das Material des Behältermantels, z.B. der Seitenwand bzw. der Seitenwände 12 des Behälters 10 kann ohne weiteres nicht durchsichtig bzw. nicht durchscheinend sein. Das Material 9 weist eine Oberfläche bzw. einen Pegel 14 auf, welche bzw. welcher auf einem Niveau gegenüber dem Boden 11 des Behälters 10 liegt. Die Höhe des Materialpegels 14 über dem Behälterboden 11 bestimmt die Menge des Materials 9 im Behälter 10, dessen Mantel aus einem nicht dehnbaren Material ist.

Der Sensor 1 ist der Aussenseite des Mantels des Behälters 10 zugeordnet. Im dargestellten Fall ist der Sensor 1 bzw. sein Hohlleiter 4 der Seitenwand 12 des Behälters 10 zugeordnet, und zwar so, dass die Längsachse A des Hohlleiters 4 praktich parallel zur Längsachse B des Behälters 10 verläuft. Die Aussenseite des Hohlleiters 4 liegt im dargestellten Fall dicht auf der Aussenseite des Mantels bzw. der Seitenwand 12 des Behälters 10. Unter Umständen kann es für die Funktion der vorliegenden Sensoreinrichtung jedoch vorteilhafter sein, wenn sich das Dielektrikum bzw. die Aussenseite des Hohlleiters 4 in einem kleinen Abstand, beispielsweise von einigen Millimetern, vom zu detektierenden Material bzw. von der Aussenseite des Behälters 10 befindet. Der Sensor 1 kann auch einem Förderband, einem Rohr oder dgl. zugeordnet sein, welche zum Transport von Material 9 dienen.

In jener Wand 18 des Mantels 5 des Hohlleiters 4, welche an der Behälterwand 12 anliegt oder dieser zugewandt ist, ist eine Oeffnung 7 ausgeführt. Diese Oeffnung 7 kann mit einer Scheibe aus einem dielektrischen Material ausgefüllt bzw. verdeckt sein. In Fig. 1 sind schematisch Feldlinien 8 dargestellt, welche durch die Oeffnung 7 aus dem Inneren des Hohlleiters 3 während des Betriebes dieser Sensoreinrichtung, d.h. wenn der Sender 2 Wellen zum Empfänger 3 aussendet, austreten und welche in das Innere des Behälters 10 eindringen können. Das Material 9 im Behälter 10, welches sich in der Nähe der Oeffnung 7 in der Hohlleiterwand 18 befindet und welches im Bereich der Wirkung der Wellen steht, kann die Eigenschaften bzw. die Grösse der dielektrischen Verluste im Dielektrikums 6 im Inneren des Hohlleitermantels 5 beeinflussen bzw. modifizieren. Zumindest jener Bereich der Wand 12 des Behälters 10, welchem der Sensor 1 und insbesondere die Oeffnung 7 in der Wand 18 zugeordnet ist, ist aus einem dielektrischen, d.h. aus einem elektrisch isolierendem Material. Von Vorteil ist, wenn der ganze Mantel des Behälters 10 aus einem isolierenden Material ist.

An den Ausgang des Empfängers 3 kann ein an sich bekannter elektronischer Schaltungskreis angeschlossen sein. Ein solcher Kreis wertet das durch den Empfänger 3 empfangene hochfrequente Signal aus, wodurch das Material 9 im Behälter 10 detektiert werden kann. Dieser Schaltungskreis wertet insbesondere das Mass der Verluste von Energie während des Durchganges der Wellen durch jenen Bereich des Dielektrikums 6, wo die Eigenschften dieses durch das zu detektierende Material 9 beeinflusst werden können. Die Aenderung der Grösse der Energieverluste im Abtastbereich 7 des Sensors 1 ist somit durch das sich in diesem Abtastbereich 7 befindliche Material 9 verursacht. In dieser Weise kann beispielsweise das Niveau der Oberfläche 14 des Materials 9 bzw. der Pegelstand im Behälter 10 ermittelt werden. Ein am Ende der Auswertungskette angeschlossenes Anzeigegerät 16 zeigt das Resultat der Auswertung im elektronischen Schaltungskreis dieser Detektoreinrichtung.

Zweckmässigerweise ist ein Analog-Digital-Umsetzer 15 in der elektronischen Auswertungskette eingeschaltet, welcher das vom Sender 3 stammende, analoge Signal in ein digitales Signal umwandelt. Durch Zählung der durch den Umsetzer 15 gelieferten Impulse kann eine beträchtliche Erhöhung der Empfindlichkeit bzw. der Trennschärfe der Sensoreinrichtung 1 erreicht werden. Normalerweise ist man bestrebt, an bzw. in einem Leiter möglichst homogene Bedingungen zu schaffen, damit die Uebertragung von Energie zwischen dem Sender und dem Empfänger möglichst verlustfrei ist und konstant bleibt. Die vorliegende Erfindung basiert auf einer Idee, gemäss welcher die Bedingungen für die Fortpflanzung von Wellen entlang einem Leiter 4 durch das zu detektierende Material absichtlich modifiziert d.h. verschlechtert oder sogar verbessert werden. Zwischen dem Sender und dem Empfänger ist somit eine inhomogene Stelle im Leiter vorhanden bzw. ausgebildet, wo die Fortpflanzungseigenschaften des Leiters durch einen Einfluss von Aussen her geändert werden können. Diese Aenderungen werden durch das zu detektierende Material verursacht, welches sich zumindest teilweise ausserhalb des Querschnittes des Leiters befindet.

Die Modifikation der Fortpflanzugsbedingungen wirkt sich als Aenderung der Menge der vom Sender zum Empfänger übertragenen Energie aus. Solche Aenderungen lassen sich durch die angeschlossenen elektronischen Schaltungskreise aus- und verwerten. Aus dem Vorhandensein oder Nicht-Vorhandensein der genannten Modifikation wird darauf geschlossen, ob das Material im Abtastbereich des Sensors vorhanden ist oder nicht. Ferner kann aus dem Grad der genannten Modifikation darauf geschlossen werden, wie gross die Menge des Material im Abtastbereich des Sensors ist. Bei einer geeigneten Gestaltung des Sensors kann durch diesen auch festgestellt werden, wo sich ein Materialstück inbezug auf den Sensor befindet, bzw. wo sich die Oberfläche des Materials in einem Behälter oder ähnlich befindet.

Fig. 2 zeigt in einem vertikalen Schnitt eine zweite Ausführung des Sensors 1 der vorliegenden Sensoreinrichtung. Dieser Sensor 1 umfasst zwei Leiter 21 und 22, welche als Hohlleiter ausgeführt sind. Diese Leiter 21 und 22 verlaufen praktisch parallel zueinander und sie bilden dadurch eine Leitergruppe bzw. ein Leiterpaar. Dieses Leiterpaar 21, 22 befindet sich in einem Gehäuse 23. Wenn dieses Gehäuse 23 aus einem elektrisch leitenden Material ist, dann können die Hohlleiter 21 und 22 als Kanäle im Gehäusematerial ausgeführt sein. Falls das Gehäuse 23 aus einem elektrisch nicht leitenden Material ist, so muss der aus einem leitenden Material bestehende Mantel 5 des jeweiligen Hohlleiters 21 und 22 im Material des Gehäuses 23 eingelassen, eingebettet oder dgl. sein. Zwischen den Hohlleitern 21 und 22 befindet sich eine Zwischenwand 19.

Die Leitergruppe 21, 22 weist zwei Endpartien auf, wobei in jeder dieser Endpartien sich je ein Ende eines der Leiter 21 bzw. 22 befindet. Der Sender 2 und der Empfänger 3 befinden sich in einer dieser Endpartien des Leiterpaares und der Sender 2 und der Empfänger 3 sind je einem Ende eines der Leiter 21 bzw. 22 zugeordnet. Diese Leiterenden gehören somit zu einer der Endpartien des Leiterpaares bzw. des Gehäuses 23 an. Im dargestellten Fall befinden sich der Sender 2 und der Empfänger 3 im Inneren der Hohlleiter 21 und 22.

Im Bereich der gegenüberliegenden Endpartie des Leiterpaares weist das Gehäuse 23 eine Stirnwand bzw. Stirnfläche 24 auf, welche praktisch senkrecht zu den Längsachsen A1 und A2 der Hohlleiter 21 und 22 steht. In dieser Stirnwand 24 liegen die Mündungen 25 und 26 der anderen Enden der Leiter 21 und 22 sowie eine Frontfläche 27 der Zwischenwand 19. Diese Frontfläche 27 und die Mündungen 25 und 26 liegen praktisch in derselben Ebene.

Es ist ein Umlenkglied 30 vorgesehen, welches aus einem dielektrischen oder aus einem elektrisch leitenden Material ist und welches die Form einer Scheibe mit einer kreisrunden Umfangswand, eines Ringes, einer eckigen Platte, eines Quaders oder ähnlich haben kann. Ueber eine seiner planen Flächen ist dieses Umlenkglied 30 den Mündungen 25 und 26 der Hohlleiter 21 und 22 sowie der Frontwand 27 der Gehäusezwischenwand 19 zugeordnet. Die Form und/oder Abmessungen des Umlenkgliedes 30 sind so gewählt, dass dieses Umlenkglied 30 die Mündungen 25 und 26 der Hohlleiter 21 und 22 zumindest teilweise über- bzw. zudeckt. In in Fig. 2 dargstellten Fall liegt die mittlere Partie des Umlenkgliedes 30 auf der Frontfläche 27 der Gehäusezwischenwand 19 auf und die sich von dieser mittleren Partie weg erstreckenden Randabschnitte 31 und 32 des Umlenkgliedes 30 verdecken teilweise die Mündungen 25 und 26 der Hohlleiter 21 und 22.

Durch die Wahl eines geeigneten Materials des Umlenkgliedes 30 oder/und seiner Form oder/und der Abmessungen desselben können die Eigenschaften des Sensors 1 an die Eigenschaften des zu detektierenden Materials 9 oder/und des Behälters 10 angepasst werden. Die Stirnfläche 24 des Sensorgehäuses 23 ist von einem Kragen 28 umgeben, über welchen der Sensor 1 an der Aussenseite der Seitenwand 12 des Behälters 10 aufliegt. Die Höhe dieses Kragens 28 kann der Dicke des Umlenkgliedes 30 gleichen oder sie kann grösser sein als die Dicke des Umlenkgliedes 30, sodass ein Spalt 33 zwischen dem Umlenkglied 30 und dem Material 9 vorhanden ist. Auch durch eine zweckmässige Wahl der Höhe des Kragens 28 kann die genannte Anpassung positiv beeinflusst werden.

Der Sender 2 strahlt Mikrowellen in den ersten Hohlleiter 21 ab, welche durch diesen Senderleiter 21 bis zum Umlenkglied 30 gelangen. Ein Teil dieser Wellen wird durch jene Randpartie 31 des Umlenkgliedes 30 eingefangen, welche die Austrittsmündung 25 dieses Senderleiters 21 teilweise überdeckt. Im Inneren des Umlenkgliedes 30 werden diese eingefangenen Wellen zur Eintrittsmündung 32 des zweiten Hohlleiters 22 abgelenkt. Dieser Wellenanteil wird durch jene Randpartie 32 des Umlenkgliedes 30 in das Innere des Empfängerleiters 22 abgestrahlt, welche diese Einrittsmündung 32 teilweise überdeckt.

Die Menge der Wellenenergie, welche in dieser Weise bis zum Empfänger 3 gelangt, hängt von den Verlusten im Umlenkglied 30 und in seiner Umgebung ab. Wenn sich das Material 9 im Bereich des Umlenkgliedes 30 befindet, dann sind die Eigenschaften des Umlenkgliedes 30 bzw. die dielektrischen Verluste im Umlenkglied 30 anders als wenn sich kein Material 9 im Bereich des Umlenkgliedes 30 befindet. Folglich werden unterschiedliche Mengen von Energie in diesen zwei Fällen bis zum Empfänger 3 übertragen. So kann die Auswerteschaltung 15, 16 erkennen, ob sich das zu detektierende Material 9 in der Nähe des Sensors 1 befindet oder nicht.

Fig. 3 zeigt perspektivisch eine dritte Ausführung der vorliegenden Sensoreinrichtung. Die Ausbildung dieser Sensoreinrichtung entspricht weitgehend der Ausbildung der Sensoreinrichtung gemäss Fig. 2. Der einzige Unterschied besteht darin, dass die Leiter 31 und 32 Koaxialleiter sind.

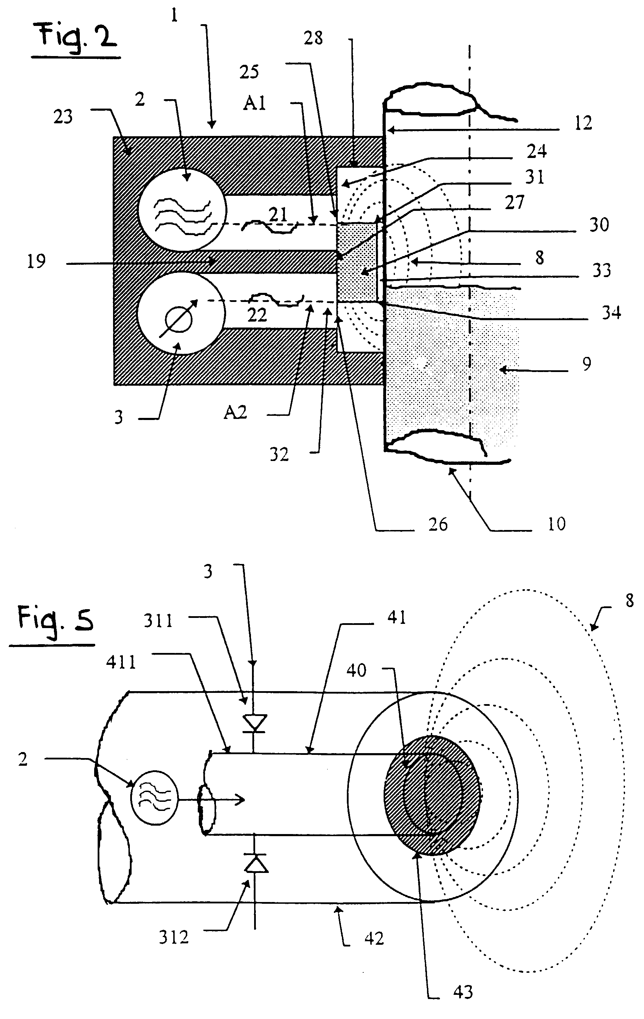

Fig. 4 zeigt in einer Draufsicht eine vierte Ausführung der vorliegenden Sensoreinrichtung. Bei dieser Einrichtung weist der Sensor 1 eine Grundplatte 35 auf, welche eine Leiterplatte beispielsweise für gedruckte Schaltungen sein kann. Auf dieser Grundplatte 35 sind parallel nebeneinander verlaufende Leiter 36 und 37 für hochfrequente Schwingungen ausgeführt. Den einen Enden dieser Leiter 36 und 37 sind der Sender 2 und der Empfänger 3 zugeordnet. Den anderen Enden der Leiter 36 und 37 ist das Umlenkglied 30 zugeordnet. Dieses Umlenkglied 30 kann beispielsweise über seine von der Grundplatte 35 abgewandte Oberfläche bzw. Oberseite 38 dem Behälter 10 in der bereits beschriebenen Weise zugeordnet sein.

Fig. 5 zeigt perspektivisch eine fünfte Ausführung der vorliegenden Sensoreinrichtung. Die Leiter 41 und 42 dieser Sensoreinrichtung sind als Hohlleiter ausgeführt, welche unterschiedliche Durchmesser haben. Im dargestellten Fall haben die Hohlleier 41 und 42 einen kreisrunden Querschnitt. Die Hohlleiter 41 und 42 können jedoch auch beispielsweise einen viereckigen Querschnitt haben. Der Hohlleiter 41 mit dem kleineren Durchmesser bzw. mit den kleineren Abmessungen ist im Inneren des Hohlleiters 42 mit dem grösseren Durchmesser bzw. mit den grösseren abmessungen koaxial angeordnet. Die Wand 411 des Hohlleiters 41 mit dem kleineren Durchmesser ist somit für die beiden Hohlleiter 41 und 42 gemeinsam und sie stellt die innere Wand des Hohlleiters 42 mit dem grösseren Durchmesser dar.

In einer der Endpartien eines solchen Hohlleitergefüges befinden sich der Sender 2 und der Empfänger 3, wobei der Sender 2 dem in dieser Endpartie liegenden Ende des Hohlleiters 41 mit der kleineren Abmessung zugeordnet ist. Der Empfänger 3 ist jenem Ende des Hohlleiters 42 mit der grösseren Abmessung zugeordnet, welches ebenfalls in dieser Endpartie dieses Hohlleitergefüges liegt. Diese Anordnung des Senders 2 und des Empfängers 3 bietet den Vorteil, dass der Empfänger 3 mehrere Dioden 311, 312 usw. umfassen kann, welche entlang dem Umfang des Hohlleiters 41 bzw. 42, vorteilhaft in regelmässigen Abständen voneinander, angeordnet sind.

Es ist jedoch auch möglich, die Anordnung des Senders und des Empfängers füreinander zu vertauschen, sodass der Sender 2 sich im Hohlleiter 42 mit dem grösseren Durchmesser befindet, während der Empfänger 3 im Hohlleiter 41 mit dem kleineren Durchmesser ist.

In der gegenüberliegenden Endpartie dieses Hohlleitergefüges liegen die anderen Enden der Hohlleiter 41 und 42, die anderen Stirnflächen bzw. Mündungen der Hohlleiter 41 und 42. Diese Mündungen der Hohlleiter 41 und 42 liegen in einer Ebene. nd diesen Hohlleiterenden bzw. -mündungen ist Es ist ein Umlenkglied 40 vorgesehen, welches als eine Platte, ein Ring oder ähnlich ausgeführt sein kann. Dieses Umlenkglied 40 ist der Stirnfläche bzw. Stirnkante der Wand 411 des Hohlleiters 41 mit dem kleineren Durchmesser zugeordnet. Ein solcher Sensor kann mit jener Endpartie dem abzutastenden Gegenstand zugeordent sein, welche das Umlenkglied 40 umfasst. Das Umlenkglied 40 selbst kann dem Behälter 10 in der im Zusammenhag mit Fig. 2 beschriebenen Weise zugeordnet sein.

Die äussere Randpartie 43 des Umlenkgliedes 40 steht von der Wand 411 des inneren Hohlleiters 41 in radialer Richtung ab und diese Randpartie 43 verdeckt bzw. überdeckt zumindest teilweise die Mündung des Hohlleiters 42 mit dem grösseren Durchmesser. Im in Fig. 5 dargestellten Fall verdeckt das Umlenkglied 40 mit seiner Randpartie 43 die Mündung des grösseren bzw. äusseren Hohlleiters 42 nur teilweise. Wenn das Umlenkglied 40 als ein Ring ausgeführt ist, dann verdeckt dieser Ring 40 die Mündung des inneren Hohlleiters 41 nur teilweise.

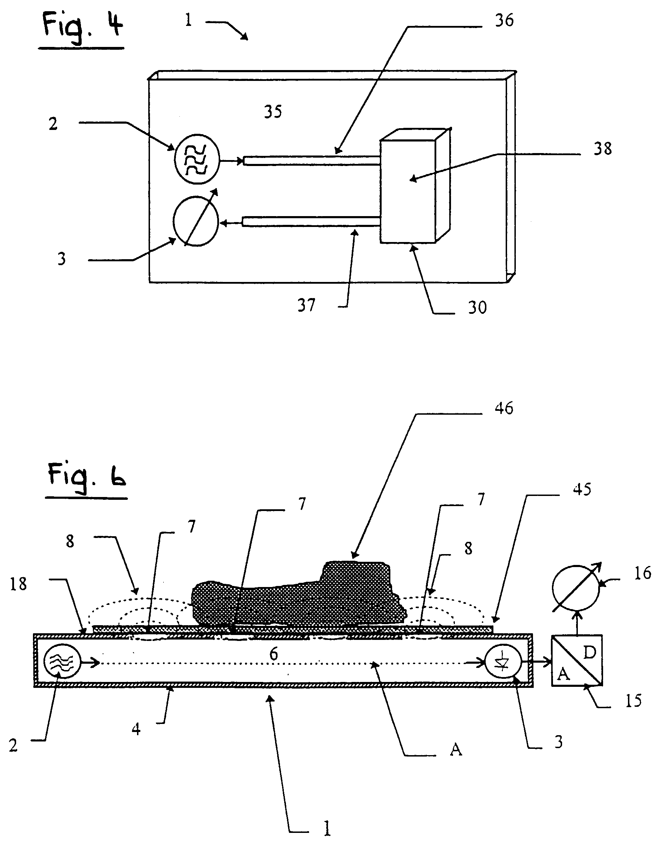

In Fig. 6 ist eine weitere Ausführungsmöglichkeit der vorliegenden Sensoreinrichtung dargestellt, welche eine Weiterentwicklung der Sensoreinrichtung gemäss Fig. 1 darstellt. Der Sensor 1 der Sensoreinrichtung gemäss Fig. 5 weist mehrere Oeffnungen 7 auf. Diese Oeffnungen 7 sind in zumindest einer der Wände 18 des Sensors 1 ausgeführt und sie sind entlang dieser Wand 18 verteilt, beispielsweise in gleich grossen Abständen.

In Fig. 6 ist der Sensor 1 so orientiert, dass seine Längsachse A praktisch horizontal verläuft. Ein so angeordneter Sensor 1 ist einem Förderband 45 zugeordnet, von dem in Fig. 6 nur ein Ausschnitt des oberen Trums desselben dargestellt ist. Die Längsachse A des Sensors 1 verläuft parallel zur Längsrichtung des Förderbandes 45 und die Wand 18 des Sensors 1, in welcher die Oeffnungen 7 ausgeführt sind, ist dem genannten Trum des Förderbandes 45 zugewandt. Mit Hilfe eines so ausgeführten und angeordneten Sensors 1 kann festgestellt werden, ob sich ein Gegenstand 46 auf dem Förderband 45 befindet, wo sich der Gegenstand 46 auf dem Förderband 45 befindet, wieviel Gegenstände 46 sich auf dem Förderband befinden usw.

Der horizontal angeordnete Sensor 1 kann jedoch auch senkrecht zur Längsrichtung des Förderbandes 45 stehen und er kann der Austrittspartie dieses Förderbandes 45 zugeordnet sein (nicht dargestellt). Der Sensor 1 kann das Vorhandensein eines vom Förderband 45 herabfallenden Materialstroms 9 ermitteln oder die vom Förderband 45 herabfallenden Gegenstände 46 zählen. Wenn die Länge des Wellenleiters 4 des Sensors 1 der Breite des Förderbandes 45 entspricht, dann ist für die Ermittlung des Materials 9 bzw. der Gegenstände 46 ohne Bedeutung, an welcher Stelle der Breite des Förderbandes 45 der Materialstrom 9 oder die Gegenstände 46 das Förderband 45 verlassen.

Es ist auch eine Ausführung dieser Sensoreinrichtung möglich (nicht dargestellt), bei welcher zwei Hohlleiter mit praktisch gleichen Abmessungen so angeordnet sind, dass sie einerends einander zugewandt sind. Die Längsachsen dieser Hohlleiter liegen auf einer gemeinsamen Geraden oder auf den Schenkeln einer geknickten Linie. Zwischen den sich einander zugewandten Enden der Leiter ist jener Raum, wo das zu detektierende Material wirken kann und wo sich das Umlenkglied zumindest teilweise befinden kann. Den voneinander abgewandten Enden der Leiter sind der Sender und der Empfänger in der vorstehend beschriebenen Weise zugeordnet. Der Entscheid darüber, ob sich das Material in der Nähe des Umlenkgliedes befindet, hängt somit auch bei dieser Ausführungsform der vorliegenden Erfindung von der Menge der durch das Umlenkglied durchgelassenen Energie ab.

## Patentansprüche

1. Sensoreinrichtung mit einem Sensor (1), welcher einen Sender (2) von hochfrequenten Wellen und einen Empfänger (3) für solche Wellen umfasst, dadurch gekennzeichnet, dass die Arbeitsweise des Sensors auf der Möglichkeit einer Aenderung der dielektrischen Eigenschaften des sich zwischen dem Sender und dem Empfänger befindlichen Raums basiert.

2. Einrichtung nach Patentanspruch 1, dadurch gekennzeichnet,
dass sich zumindest ein Wellenleiter zwischen dem Sender und dem Empfänger befindet, welcher ein Dielektrikum enthält, und
dass dieser Wellenleiter so ausgeführt ist, dass die dielektrischen Eigenschaften des Wellenleiters durch Umstände ausserhalb des Sensors (1) geändert werden können.

3. Einrichtung nach Patentanspruch 2, dadurch gekennzeichnet,
dass der Wellenleiter ein Hohlleiter (4) ist, dass dieser Hohlleiter einen Mantel (5) aus einem elektrisch leitenden Material aufweist, welcher mit einem Dielektrikum (6) ausgefüllt ist,
dass zumindest eine Oeffnung (7) im Hohlleitermantel (5) ausgeführt ist und dass jenes Material (9), welches durch den Sensor (1) detektiert werden soll, durch die genannte Wandöffnung (7) die Eigenschaften des Dielektrikums (6) im Inneren des Hohlleiters (4) ändern kann.

4. Einrichtung nach Patentanspruch 3, dadurch gekennzeichnet,
dass der Sensor (1) einem Behälter (10) derart zugeordnet ist,
dass die Oeffnung (7) im Hohlleitermantel (5) sich in jenem Bereich der Wand (12) des Behälters (10) befindet, wo das Material detektiert werden soll.

5. Einrichtung nach Patentanspruch 2, dadurch gekennzeichnet,
dass zwei Wellenleiter (21,22;31,32;36,37;41,42) vorgesehen sind, welche praktisch parallel zueinander verlaufen, dass diese Leitergruppe bzw. dieses Leiterpaar zwei Endpartien aufweist, wobei in jeder dieser Endpartien sich je ein Ende eines der Leiter befindet, dass der Sender (2) bzw. der Empfänger (3) je einem Ende eines der Leiter zugeordnet ist, welche sich in einer der Endpartien des Leiterpaares befinden, und
dass ein Umlenkglied (30;40) aus einem dielektrischen oder einem elektrisch leitenden Material den gegenüberliegenden Enden der Leiter zugeordnet ist, welche in der anderen Endpartie des Leiterpaares liegen.

6. Einrichtung nach Patentanspruch 5, dadurch gekennzeichnet,
dass das Umlenkglied (30;40) den Stirnflächen bzw. Mündungen der Leiter so zugeordnet ist, dass es diese zumindest teilweise überdeckt.

7. Einrichtung nach Patentanspruch 5, dadurch gekennzeichnet,
dass die Leiter Hohlleiter (21,22) oder Koaxialleiter (31,32) oder Streifenleiter (36,37) sind.

8. Einrichtung nach Patentanspruch 5, dadurch gekennzeichnet,
dass die Leiter Hohlleiter (41,42) sind, dass einer dieser Hohlleiter (41) einen kleineren Durchmesser hat als der andere Hohlleiter (42), dass der kleinere Hohlleiter (41) im Inneren des grösseren Hohlleiters (42) koaxial angeordnet ist, dass der Sender (2) dem Ende des einen Hohlleiters und der Empfänger (3) dem Ende des anderen Hohlleiters zugeordnet ist, wobei diese Leiterenden sich in derselben Endpartie des Leiterpaares befinden, und dass das Umlenkglied (40) den gegenüberliegenden Enden der Hohlleiter (41,42) zugeordnet ist, welche sich in der gegenüberliegenden Endpartie des Leiterpaares befinden.

9. Einrichtung nach Patentanspruch 5, dadurch gekennzeichnet,
dass zwei Wellenleiter vorgesehen sind, die so angeordnet sind,
dass die einen Enden dieser Leiter einander zugewandt sind,
dass die Längsachsen dieser Leiter auf einer gemeinsamen Geraden liegen können, dass zwischen den sich einander zugewandten Enden der Leiter sich jener Raum befindet, wo das zu detektierende Material wirken kann.

10. Einrichtung nach Patentanspruch 3, dadurch gekennzeichnet,
dass der Sensor (1) zum Anbringen an der Aussenseite jenes Behälters (10) ausgeführt ist, welcher zur Aufnahme des zu detektierenden Materials bestimmt ist.
